# EUROPEAN PATENT APPLICATION

(11) **EP 2 521 045 A1**
(43) Date of publication of application: **07.11.2012**
(21) Application number: 10840785.9
(22) Date of filing: 28.12.2010
(51) Int. Cl.: G06F 17/30, G06F 17/21

(54) **CONTENT CONFIGURATION METHOD**

(30) Priority: 30.12.2009 JP 2009299304
(71) Applicant: Taggy, Inc., Tokyo 107-0061 (JP)
(72) Inventor: ISHIGAMI, Yutaka, Tokyo 107-0061 (JP)
(74) Representative: Exell, Jonathan Mark
(86) International application number: PCT/JP2010/007597
(87) International publication number: WO 2011/080926

(57) **Abstract**

Disclosed is a content configuration method with the objective of providing a method for classifying and organizing related content within a Web page and freely reconfiguring and displaying thereof. The problem is resolved by a method that includes an in-Web arrangement tracking step (step 101), a Web partitioning step (step 102), a feature term extraction step (step 103), a feature term organizing step (step 104), a display-information organizing step (step 105), and a related Web page display step (step 106). In this manner, by organizing information within a Web page by content unit for each attribute, the disclosed content configuration method is capable of freely reconfiguring and displaying the content to promote action of a user.

## Description

### Technical Field

The present invention relates to a method for classifying and organizing content in related web pages and displaying the content. More specifically, the present invention relates to a method for classifying and organizing contents in related web pages which are hit by a keyword search or a category search for each attribute in advance and then freely reconstructing and displaying links to the related web pages and the organized content.

### Background Art

Japanese Patent Application Laid-Open No. 2009-87106 discloses an Internet information providing system. Thus, a method for displaying a plurality of web pages or links to the web pages, which are related to a certain search term is already known.

### Citation List

### Patent Literature

Patent Literature 1: Japanese Patent Application Laid-Open No. 2009-87106

### Summary of Invention

### Technical Problem

For example, there is a company web site which has a plurality of content and which has web pages corresponding to each content. Even in such a case, in the company web site, it is possible to extract content and display a link by using search.

However, such a link display is a row of text information, which is not meaningful. Also, a link displayed with text only is not user friendly and appropriate link destination cannot be checked unless all characters are read.

Therefore, there is a problem that, even if there is a possibility that a user is interested in a certain content and a plurality of links are displayed, there is a high probability that the user does not access the content.

Therefore, an object of the present invention is to provide a method for promoting action of a user by classifying and organizing content in related web pages and freely reconstructing and displaying the content.

### Solution to Problem

The present invention relates to a method for classifying and organizing content in a plurality of related web pages and freely reconstructing and displaying the content.
In this method, a server classifies the content in a plurality of related web pages into texts and images and understands arrangement of the texts and images in each related web page (in-web arrangement understanding step).
The server divides each related web page into a plurality of segments on the basis of the arrangement of the texts and images understood in the in-web arrangement understanding step (web dividing step).
The server extracts a feature term of a segment based on texts included in the segment for each segment of each web page divided in the web dividing step (feature term extraction step).
The server organizes the feature terms of each segment of each related web page extracted in the feature term extraction step (feature term organizing step).
The server organizes texts related to a feature term and images related to the feature term on the basis of the feature terms organized in the feature term organizing step (display information organizing step).
And, the server causes a terminal connected to the server via a communication line to display the texts related to the feature terms organized in the display information organizing step and the images related to the feature terms organized in the display information organizing step along with links to a plurality of related web pages (related web page display step).

As described above, the method of the present invention organizes information in web pages into content units for each attribute, so that the method can freely reconstruct and display the content.

A preferred embodiment of the present invention is a web page on which related web pages are assumed to be related by a web search using the Internet.

Conventionally, in a related site search using the Internet, web pages which include inputted keywords or include words highly similar to the inputted keywords are searched mechanically. A machine cannot understand the meaning of the keywords, so that a site highly related to the keywords is not necessarily hit in the search. Further, a display list of the search result is a row of text information, which is unambiguous. Therefore, it is not possible to directly display information which a user wants to see. For example, it is assumed that there is an image, which would significantly attract user's attention if the user sees the image, as an image in a related web site. In a conventional related site search, a screen showing the search result does not include such an image that is related to a request set freely by an operator of the web site. Therefore, even when there is a site that would attract user's attention, a case occurs in which the user does not access the site.

Therefore, in this embodiment, when showing the site search result, content according to a request from the operator of the web site are freely reconstructed and displayed.

In a preferred embodiment of the present invention, all of a plurality of related web pages are web pages included in a certain web site, and the preferred embodiment includes a step for adding a feature term extracted in the feature term extraction step to a top page of the certain web site as a search index. When the user selects the search index included in the top page, a link display related to the feature term is automatically created.

By using this function, for example, when an operator of a web site edits a certain special page, the operator can freely specify contents of the special page. A feature term indicating the contents is used as a search index, so that links to web pages related to the search index can be displayed and contents to be inserted in spaces assigned to the linked web pages can be freely designed. In this system, a link display screen related to the search index is not fixed. Therefore, when a web page related to a certain web site is added, the added web page is also analyzed, so that when displaying links related to the search index, the added web page can be automatically considered.

Another preferred embodiment of the present invention uses a tag as a feature term. In this embodiment, tags are given to contents in a web page. Content displayed on a terminal are organized by using the tags. Based on this, the terminal displays not only texts and links to the content, but also, for example, images related to the content.

The method of this embodiment is a method for organizing and displaying content in a plurality of related web pages. A tag is given to each content in each related web page. An example of the plurality of related web pages is web pages that are assumed to be related by a web search.
A server understands arrangement of texts and images in each related web page by using tags for the content in a plurality of related web pages (in-web arrangement understanding step).
The server divides each related web page into a plurality of segments on the basis of the arrangement of the texts and images understood in the in-web arrangement understanding step (web dividing step).
The server organizes tags of each segment of each related web page extracted in the feature term extraction step (feature term organizing step).
The server organizes texts related to a tag and images related to the tag on the basis of the tags organized in the feature term organizing step (display information organizing step).
The server displays the texts related to the tags organized in the display information organizing step and the images related to the tags organized in the display information organizing step along with links to a plurality of related web pages on a terminal connected to the server via a communication line (related web page display step).

### Advantageous Effects of Invention

According to the present invention, it is possible to provide a method for classifying and organizing content in related web pages and freely reconstructing and displaying the content.

### Brief Description of Drawings

Fig. 1 is a flowchart for implementing a method of the present invention.
Fig. 2 is a block diagram for implementing the method of the present invention.
Fig. 3 is a functional block diagram showing a basic configuration of a server.
Fig. 4 is a diagram showing an example of a related web page.
Fig. 5 is a diagram showing an example in which a certain web site is divided into segments.
Fig. 6 shows a web site of OO House Corporation before introducing a system of the present invention.
Fig. 7 shows a web site of OO House Corporation after introducing the system of the present invention.
Fig. 8 shows a web site of OXOX before introducing the system of the present invention.
Fig. 9 shows a web site of OXOX after introducing the system of the present invention.

### Description of Embodiments

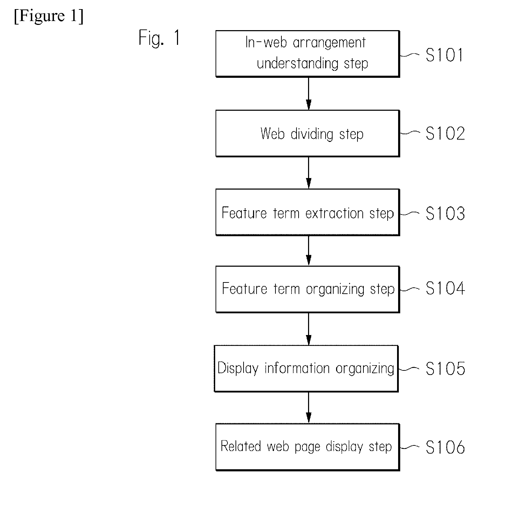

Hereinafter, an embodiment of the present invention will be described. A first aspect of the present invention relates to a method for classifying and organizing content in a plurality of related web pages and freely reconstructing and displaying the content. Fig. 1 is a flowchart for implementing the method of the present invention. "S" in Fig. 1 means a step. As shown in Fig. 1, this method includes an in-web arrangement understanding step (step 101), a web dividing step (step 102), a feature term extraction step (step 103), a feature term organizing step (step 104), a display information organizing step (step 105), and a related web page display step (step 106).

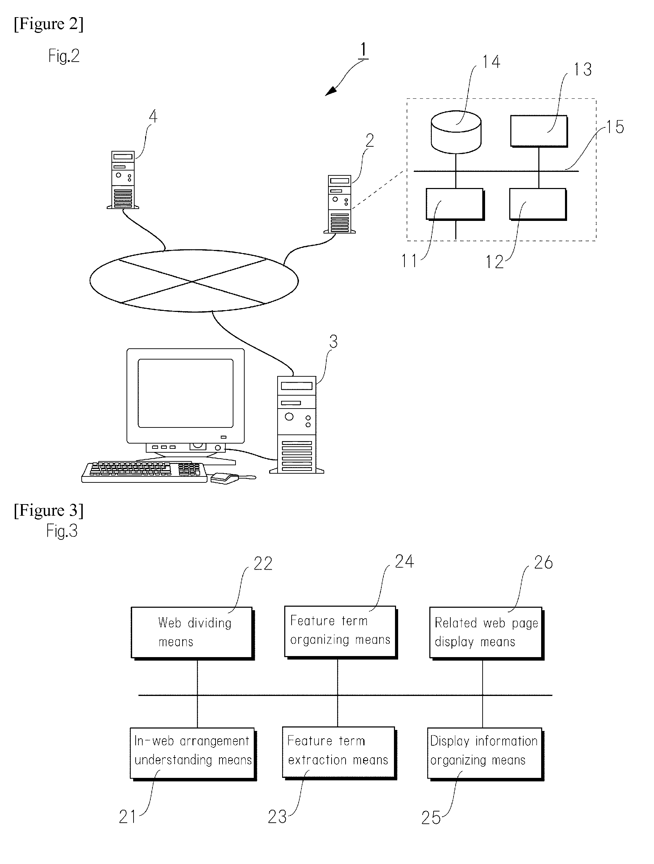

Fig. 2 is a block diagram for implementing the method of the present invention. As shown in Fig. 2, a system 1 of the present invention includes a server 2 in which a system of the present invention is installed. The server 2, a client 3, and a server 4 are connected to each other via a communication line such as the Internet. Normally, there are a plurality of clients 3 and a plurality of servers 4.

The server 2 includes an input/output unit 11, a control unit 12, a calculation unit 13, and a storage unit 14. These units are connected to each other via a bus 15 or the like and the units can transmit and receive information to and from each other. Specifically, when predetermined information is inputted from the input/output unit 11 to the control unit 12, the control unit 12 reads a control program stored in main memory of the storage unit 14. The control unit 12 reads data stored in the storage unit 14 as needed and performs a predetermined calculation by the calculation unit 13. Then, the control unit 12 temporarily stores the calculation result in the storage unit 14 and outputs the calculation result from the input/output unit 11. The client 3 and the server 4 also have the same configuration as described above.

Fig. 3 is a functional block diagram showing a basic configuration of the server 2. As shown in Fig. 3, the server 2 includes an in-web arrangement understanding means 21, a web dividing means 22, a feature term extraction means 23, a feature term organizing means 24, a display information organizing means 25, and a related web page display means 26.

The in-web arrangement understanding means 21 is a means for classifying content in a plurality of web pages, which are assumed to be related, into texts and images and understanding arrangement of the texts and images in each related web page.

The web dividing means 22 is a means for dividing each related web page into a plurality of segments on the basis of the arrangement of the texts and images understood by the in-web arrangement understanding means.

The feature term extraction means 23 is a means for extracting a feature term of a segment based on texts included in the segment for each segment of each web page divided by the web dividing means.

The feature term organizing means 24 is a means for organizing feature terms of the segments of the related web pages extracted by the feature term extraction means.

The display information organizing means 25 is a means for organizing texts related to a feature term and images related to the feature term on the basis of the feature terms organized by the feature term organizing means.

The related web page display means 26 is a means for arranging information for causing a terminal connected to the server 2 via a communication line to display the texts related to the feature terms organized by the display information organizing means and the images related to the feature terms organized by the display information organizing means along with links to a plurality of related web pages.

Next, a method for organizing and displaying contents in a plurality of related web pages according to the first aspect of the present invention will be described with reference to an embodiment.

In an example below, a web site of OO House Corporation will be described as an example. The web server 4 of OO House Corporation includes a plurality of web pages of OO House Corporation. Each web page is stored in a database in the server 4.

The client 3 of a certain user is connected to a server 2 and the server 4 via a communication line. For example, the user accesses the web site of OO House Corporation. It is assumed that the user selects a used condo, an area, and a price range. This information is transmitted from the client 3 of the user to the server 2.

The server 2 searches a database in the server 2 by using the information (information related to the used condo, the area, and the price range) which is received from the client 3 and used to search web. The server 2 collects information from the web site of OO House Corporation connected to the server 4 in advance and stores the information in the data base of the server 2 so that the client 3 can display the web pages and link information to the web pages as a search result.

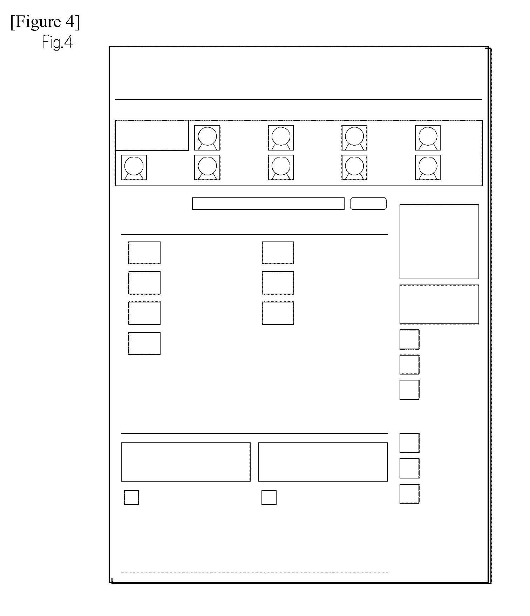

Fig. 4 is a diagram showing an example of a related web page.

Normally, a web page is created using a language for creating a web page. Different tags are given to texts and images. Therefore, for example, by understanding appearance positions of the tags, it is possible to classify the contents in a web page into texts and images and further it is possible to understand positions of texts and images in related web pages.

Specifically, the in-web arrangement understanding means 21 reads the related web pages from a web site connected to the server 4. Then, the in-web arrangement understanding means 21 classifies the contents included in the related web pages into texts and images by using tags given to the related web pages. Thereby, the in-web arrangement understanding means 21 understands the positions of the texts and images of the related web pages (step 101). The arrangement information may be manually modified. In this case, the server may receive inputted information and perform information processing accordingly.

The web dividing means 22 divides each related web page into a plurality of segments on the basis of the arrangement of the texts and images understood by the in-web arrangement understanding means (step 102).

For example, a text for explaining an image is provided at a position near the image. Therefore, to understand what attribute is associated with an image, a web page is divided into a plurality of segments. A title and a body text often have different font sizes and different font colors from each other. For example, the font sizes and the font colors are specified by tags in the language that creates the web page. Therefore, it is possible to understand the difference between fonts by analyzing the tags. In this way, the web page can be divided into a plurality of segments. The segment information may be manually modified. In this case, the server may receive inputted information and perform information processing accordingly.

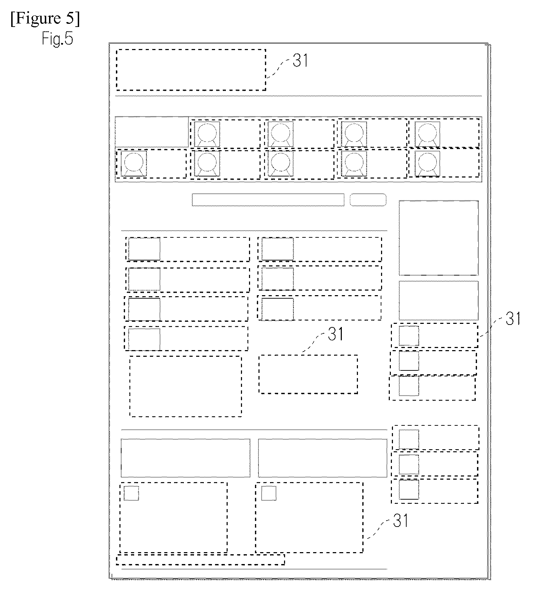

Fig. 5 is a diagram showing an example in which a certain web site is divided into segments. Reference numeral 31 in Fig. 5 denotes a divided segment.

The feature term extraction means 23 extracts a feature term of a segment based on texts included in the segment for each segment of each web page divided by the web dividing means (step 103).

The feature term may be included in the texts and the feature term may be extracted from the texts. A term not included in the texts may be extracted from a feature term database as a feature term by using the feature term database in the server 2. The feature term may be extracted and added manually. In this case, the server may receive inputted information and perform information processing accordingly.

The feature term database in the server 2 is, for example, a database in which certain words and a related feature term are associated with each other and stored. For example, certain words (8 tatami mats, 100 square meters) are stored in association with a feature term "room layout". A method for dividing a text into a plurality of word groups has been known. Therefore, the feature term extraction means 23 divides texts included in a segment into words. The feature term extraction means 23 accesses the feature term database for each word and extracts a feature term. By doing so, it is possible to understand what term is associated with the segment. Also, it is possible to recommend a feature term from what information the texts are related to. Thereby, it is possible to appropriately understand the attribute of the segment regardless of the words used in the texts. An example of the attribute is "room layout". The attribute information may be manually modified. In this case, the server may receive inputted information and perform information processing accordingly.

By doing as described above, it is possible to divide each related web page into segments and understand the attribute of each segment. Examples of the attribute are title (condo name), nearest station, distance from the nearest station, rent, room layout information, room layout, interior photo, and building exterior.

Also it is possible to divide each web page into minimum content units, associate each minimum content unit with a feature term, and store the minimum content units and the feature terms in the database of the server 2. Examples of the minimum content unit (segment) are category, title, trade name, price, body text, image, contributor name, comment, evaluation, rent, nearest station, distance from the nearest station, rent, room layout information, room layout, interior photo, building exterior, and the like.

The feature term organizing means 24 organizes the feature terms of the segments of the related web pages extracted by the feature term extraction means (step 104). For example, it is assumed that an operator of the web site requests to display condo name, rent, nearest station, room layout, and interior photo as a search result. The present invention analyzes and understands related web pages and displays a link screen to the related web pages instead of displaying fixed links. Therefore, according to the present invention, it is possible to freely adjust contents extracted from the related web pages. The server 2 extracts information related to condo name, rent, nearest station, room layout, and interior photo included in the related web pages in association with each related web page. Then, the server 2 performs organization to display five links to web pages and related information on one web page screen. The organization includes the size of image and assignment of information.

The server 2 calculates spaces to display the five links to web pages and the related information on one web page screen. The server 2 obtains allocations of a body text and an image in each space. The server 2 can automatically obtain the allocations by using the area of each space, the number of texts, and the number of images. The allocations may be manually modified. In this case, the server may receive inputted information and perform information processing accordingly. When the size of the images is determined, the server 2 performs a process to modify the sizes of images in the related web pages into the determined size. In this process, the server 2 reads information related to the sizes of the images. Then the server 2 obtains values related to enlargement and reduction of the images by using information of space of each image. Then the server 2 enlarges or reduces the images on the basis of the values related enlargement and reduction and stores the images in the storage unit.

The server 2 stores information related to condo name, rent, nearest station, room layout, and interior photo included in the related web pages for each related web page. Therefore, in step 104, the server 2 determines arrangement of texts such as condo name, rent, nearest station, and the like, and then, stores information related to condo name, rent, nearest station, and the like as information to be arranged in an appropriate portion in association with each related web page. In this way, the feature terms for each segment of the related web pages are organized.

The related web page display means 26 arranges information for causing a terminal connected to the server 2 via a communication line to display the texts related to the feature terms organized by the display information organizing means and the images related to the feature terms organized by the display information organizing means along with links to a plurality of related web pages (step 105).

The server 2 collects information from the web site connected to the server 4 in advance and stores the information in the data base of the server 2 so that the client 3 can display link information including images in each space. This information includes the number of divided spaces, arrangement information of condo name, rent, nearest station, room layout, and interior photo in each space, texts related to the feature terms, and size-modified images. Then, information for displaying the images is transmitted from the server 2 to the client 3. The client 3 that receives the information can display a link screen including the images on a monitor.

A preferred embodiment of the present invention is a web page on which related web pages are assumed to be related by a web search using the Internet.

Many Internet search sites are known. The server 2 of the present invention has a function of a known search engine used to perform an Internet search. When a user performs a site search, the server 2 creates a list of high ranking web sites based on a normal method. In this case, high ranking (for example, the first to the tenth) web pages are assumed to be the related web pages. Then, content to be displayed in association with links are determined on the basis of free setting by the operator of the web site. Then, the server 2 classifies the related web pages into minimum content in the same manner as described above. And then, the server 2 organizes the content to be displayed in association with links on the basis of the free setting by the operator of the web site and transmits the content to the client of the user. By doing so, when displaying the links to the related web pages, it is possible to display the content included in the related web pages along with the links.

In a preferred embodiment of the present invention, all of a plurality of related web pages are web pages included in a certain web site, and the preferred embodiment includes a step for adding a feature term extracted in the feature term extraction step to a top page of the certain web site as a search index. When the user selects the search index included in the top page, a link display related to the feature term is automatically created.

By using this function, for example, when an operator of a web site edits a special page, the operator can freely specify content of the special page. A feature term indicating the content is used as a search index, so that links to web pages related to the search index can be displayed and content to be inserted in spaces assigned to the linked web pages can be freely designed. In this system, a link display screen related to the search index is not fixed. Therefore, when a web page related to a certain web site is added, the added web page is also analyzed, so that when displaying links related to the search index, the added web page can be automatically considered.

The present invention is a method in which a computer classifies and organizes content in a plurality of related web pages and freely reconstructs and displays the contents and the method includes:
an in-web arrangement understanding step in which the computer classifies the contents in the plurality of related web pages into texts and images and understands arrangement of the texts and images in each related web page,
a web dividing step in which the computer divides each related web page into a plurality of segments on the basis of the arrangement of the texts and images understood in the in-web arrangement understanding step,
a feature term extraction step in which the computer extracts a feature term of a segment based on texts included in the segment for each segment of each web page divided in the web dividing step,
a feature term organizing step in which the computer organizes the feature terms of the segments of the related web pages extracted in the feature term extraction step, and
a display information organizing step in which the computer organizes texts related to a feature term and images related to the feature term on the basis of the feature terms organized in the feature term organizing step.
Further, the present invention provides a program for causing the computer to function as a server for executing the above method.

The above program can properly employ the configuration of the method of the present invention described above.

The present invention further provides a computer-readable information recording medium storing the above program.

### [First Embodiment]

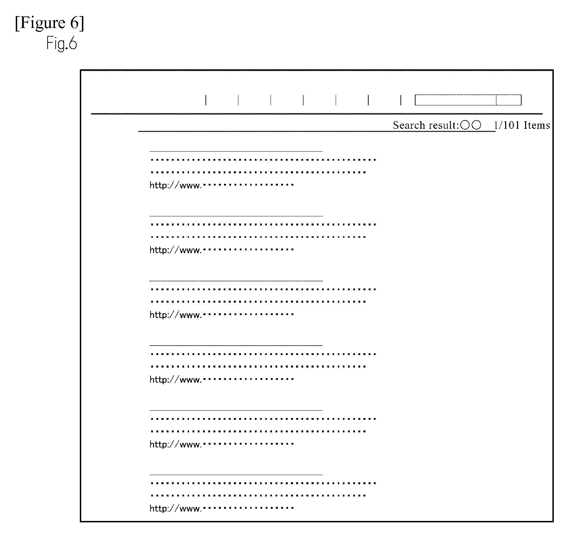

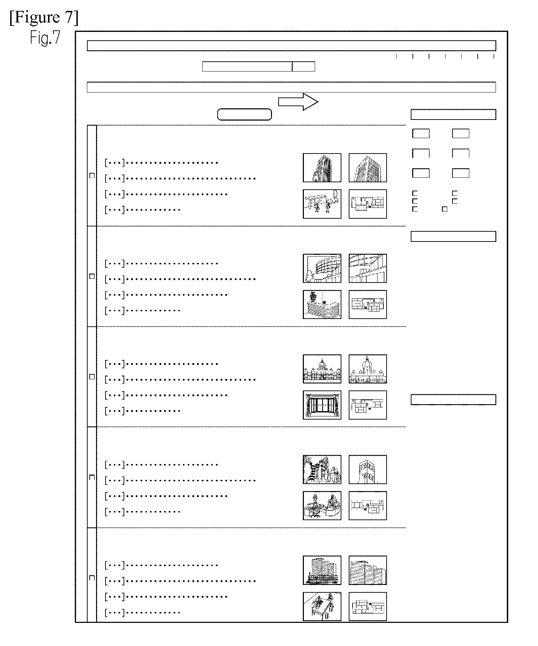

A first embodiment is a web site of OO House Corporation. Fig. 6 shows a web site of OO House Corporation before introducing a system of the present invention. Fig. 7 shows a web site of OO House Corporation after introducing the system of the present invention.

As shown in Fig. 6, when related web sites are searched for by using a certain search term, only link displays and rows of texts are displayed conventionally. In this case, it is not easy to understand content of each web site unless accessing each web site.

As shown in Fig. 7, after introducing the system of the present invention, the system automatically analyzes the content of each related web page. Thereby, the system can implement a customized link display shown in Fig. 7. The operator of the web site can freely select the content in the link display. In other words, the operator of the web site selects content which the operator wants to display in the link display. Then, the server 2 receives the selection information. Thereby, the server 2 determines spaces related to web pages of each link destination displayed on a link display screen. Then, the server 2 assigns display areas of the content, which the operator of the web site wants to display, to the spaces. By doing so, the operator of the web site can freely select content to be displayed. In the example of Fig. 7, condo names are displayed. Further, four pieces of text information selected by the operator of the web site are displayed for each link destination. Furthermore, the operator of the web site selects external view, interior, and layout of a condo, so that image information of external view, interior, and layout is also displayed on the link display screen.

### [Second Embodiment]

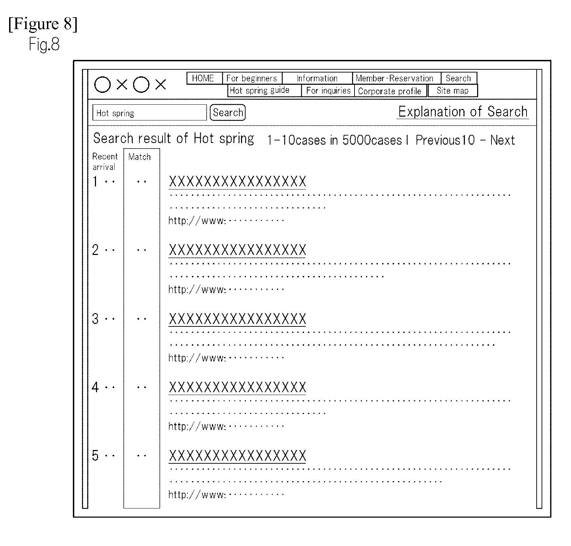

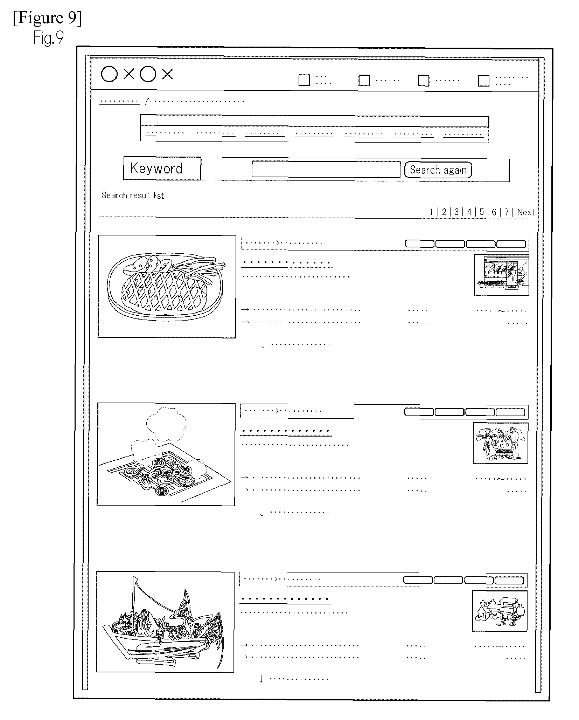

A second embodiment is a web site of OXOX, which is a travel agency. Fig. 8 shows a web site of OXOX before introducing the system of the present invention. Fig. 9 shows a web site of OXOX after introducing the system of the present invention.

Conventionally, when a user performs a search in the web site of OXOX by using a term "hot spring", as shown in Fig. 8, only text information is displayed along with links to web pages which introduce hot springs.

On the other hand, in the web site of OXOX after introducing the system of the present invention, as shown in Fig. 9, images that feature the hot springs are also displayed in addition to images of cuisine.

### Industrial Applicability

The present invention relates to information and communication technology, so that the present invention is used in an information and communication related field. Reference Signs List

- 21: In-web arrangement understanding means
- 22: Web dividing means
- 23: Feature term extraction means
- 24: Feature term organizing means
- 25: Display information organizing means
- 26: Related web page display means

## Claims

1. A method in which a server classifies, organizes, and reconstructs content in a plurality of web pages, the method comprising:
an in-web arrangement understanding step in which the server classifies content in a plurality of related web pages into texts and images and understands arrangement of texts and images in each related web page;
a web dividing step in which the server divides each related web page into a plurality of segments on the basis of the arrangement of texts and images understood in the in-web arrangement understanding step;
a feature term extraction step in which the server extracts a feature term indicating an attribute of a segment on the basis of texts included in the segment for each segment of each web page divided in the web dividing step;
a feature term organizing step in which the server organizes the feature terms of each segment of each related web page extracted in the feature term extraction step; and
a display information organizing step in which the server organizes texts related to a feature term and images related to the feature term on the basis of the feature terms organized in the feature term organizing step.

2. The method accordance with claim 1,
wherein the method further comprises a related web page display step in which the server causes a terminal connected to the server via a communication line to display the texts related to the feature terms organized in the display information organizing step and the images related to the feature terms organized in the display information organizing step along with links to a plurality of related web pages.

3. The method accordance with claim 1,
the related web pages are web pages assumed to be related by a web search using the Internet.

4. The method accordance with claim 1,
wherein all of a plurality of the related web pages are web pages included in a certain web site,
wherein the method further comprises a step for adding a feature term extracted in the feature term extraction step to a top page of the certain web site as a search index.

5. The method accordance with claim 1,
wherein the feature term extraction step in which the server uses a feature term database storing a plurality of feature term and related terms associated with each feature terms and
extracts the feature term from the feature term database by using texts in the related web pages as the related terms.
